# EUROPEAN PATENT APPLICATION

(11) **EP 1 720 363 A1**
(43) Date of publication of application: **08.11.2006**
(21) Application number: 05710657.7
(22) Date of filing: 24.02.2005
(51) Int. Cl.: H04Q 7/22, H04L 12/56, H04Q 7/28

(54) **COMMUNICATION HANDOVER METHOD, COMMUNICATION MESSAGE PROCESSING METHOD, PROGRAM FOR CAUSING COMPUTER TO EXECUTE THESE METHODS, AND COMMUNICATION SYSTEM**

(30) Priority: 25.02.2004 JP 2004050365
(71) Applicant: MATSUSHITA ELECTRIC INDUSTRIAL CO., LTD., Kadoma-shi, Osaka 571-8501 (JP)
(72) Inventor: UE, Toyoki, Matsushita Electric Ind. Co.,Ltd, Osaka-shi, Osaka 540-6319 (JP); HORI, Takako, Matsushita Electric Ind. Co.,Ltd, Osaka-shi, Osaka 540-6319 (JP)
(74) Representative: Balsters, Robert
(86) International application number: PCT/JP2005/003056
(87) International publication number: WO 2005/081560

(57) **Abstract**

Disclosed is a technique which enables a mobile node to promptly and continuously get an additional service (e.g., QoS guarantee) before and after the handover. According to the technique, a mobile terminal (MN 10) determines execution of a handover between subnets based on a predetermined condition, configures an NCoA, and acquires information on an adjoining mQNE (a node capable of changing a QoS path) 41 on the QoS path of the MN 10. The MN sends an FBU message and adjacent mQNE information to an oAR 21. The oAR forwards the adjacent mQNE information received from the MN, together with an HI message, to an nAR 31, which establishes a (C)QoS path with the mQNE for the MN based on the adjacent mQNE information.

## Description

### TECHNICAL FIELD

The present invention relates to a communication handover method and a communication message processing method, which concern the handover of a mobile terminal (mobile node) that performs radio communication, and a program and a communication system for causing a computer to execute those methods, and more particularly, to a communication handover method and a communication message processing method, which concern the handover of a mobile node that performs radio communication using the mobile IPv6 (Mobile Internet Protocol version 6) protocol that is the next generation Internet protocol and FMIP (Fast Mobile Internet Protocol), and a program and a communication system for causing a computer to execute those methods.

### BACKGROUND ART

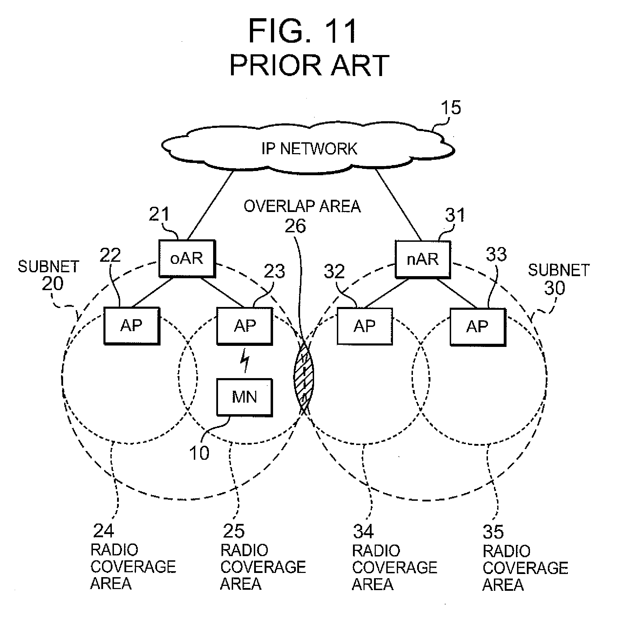

As a technology which provides a user who accesses a communication network like the Internet over a radio network from a mobile node while moving with seamless connection to the communication network, one which uses the mobile IPv6 as the next generation Internet protocol becomes popular. A radio communication system which uses the mobile IPv6 will be explained with reference to FIG. 11. The technology regarding the mobile IPv6 which will be explained below is disclosed in, for example, Non-Patent Document 1 described below.

The radio communication system illustrated in FIG. 11 includes an IP network (communication network) 15 like the Internet, a plurality of subnets 20, 30 (also called sub networks) which are connected to the IP network 15, and a mobile node (MN: Mobile Node) 10 which can be connected to any of the plurality of subnets 20, 30. In FIG. 11, two subnets 20, 30 are illustrated as the plurality of subnets 20, 30.

The subnet 20 comprises an access router (AR: Access Router: described as oAR) 21 which performs routing of IP packets (packet data), and a plurality of access points (AP: Access Point) 22, 23 which respectively constitute unique radio coverage areas (communication available areas) 24, 25. Each of those APs 22, 23 is connected to the oAR 21, which is connected to the IP network 15. In FIG. 11, two APs 22, 23 are illustrated as the plurality of APs 22, 23. The subnet 30 is constituted in the same connection mode as that of the subnet 20 by an AR (described as nAR) 31, and a plurality of APs 32, 33.

The oAR 21, which is a component of the subnet 20, and the nAR 31, which is a component of the subnet 30, can communicate with each other over the IP network 15, i.e., the subnet 20 and the subnet 30 are connected together over the IP network 15.

Suppose that in the radio communication system illustrated in FIG. 11, the MN 10 has started radio communication with the AP 23 in the radio coverage area 25. In this situation, in a case where an IPv6 address assigned to the MN 10 is not adequate for the IP address system of the subnet 20, the MN 10 present in the radio coverage area 25 acquires an IPv6 address adequate for the subnet 20, i.e., a care-of address (CoA: Care of Address) through the radio communication with the AP 23.

Methods for the MN 10 to acquire a CoA include a method by which a DHCP server assigns it in a stateful manner by a technique, such as the DHCPv6 or the like, and a method of acquiring the network prefix and prefix length of the subnet 20 from the oAR 21, and combining the network prefix and the prefix length, both obtained from the oAR 21, with the link layer address of the MN 10 at the MN 10, thus auto-configuring a CoA in a stateless manner.

The MN 10 registers (Binding Update: BU) the acquired CoA with respect to a router (home agent) on its home network, and a certain communication party (Correspondent Node: CN), thereby ensuring packet data transmission and reception in the subnet 20.

Accordingly, packet data transmitted from a predetermined communication party to the MN 10 is transferred to the MN 10 through the oAR 21 and the AP 23 based on the CoA of the MN 10, and packet data transmitted to a desired communication party by the MN 10 is transferred to the desired communication party through the AP 23 and the oAR 21. Packet data which is directed to the MN 10 and is transmitted to the home network is sent to the oAR 21 of the subnet 20 based on the CoA of the MN 10 registered at the home agent, and is transferred to the MN 10 through the AP 23.

As mentioned above, the radio communication system using the mobile IPv6 and illustrated in FIG. 11 is structured in such a way that radio communication at the MN 10 continues by using the CoA even if the MN 10 performs handover from one subnet to another. As a technology which speeds up such a handover process, a fast handover technology disclosed in, for example, Non-Patent Document 2 described below is known.

According to the fast handover technology (also called FMIP), before the MN 10 performs L2 handover, the MN 10 preacquires a new (New) CoA (hereinafter called NCoA) which is used at the subnet 30, and notifies the oAR 21 of the NCoA, so that a tunnel can be created between the oAR 21 and the nAR 31, and even during a period from the time when the MN 10 performs L2 handover to switch over connection from the AP 23 to AP 32, to the time when it moves to the subnet 30, and formally registers (BU) the NCoA preacquired, packet data transmitted to an old (Previous) CoA (hereinafter called PCoA) used in the subnet 20 is forwarded to the MN 10 through the nAR 31 and the AP 32 via the aforementioned tunnel, while packet data transmitted from the MN 10 arrives at the oAR 21 through the AP 32 and the nAR 31 via the tunnel, and is then transmitted to a communication party from the oAR 21.

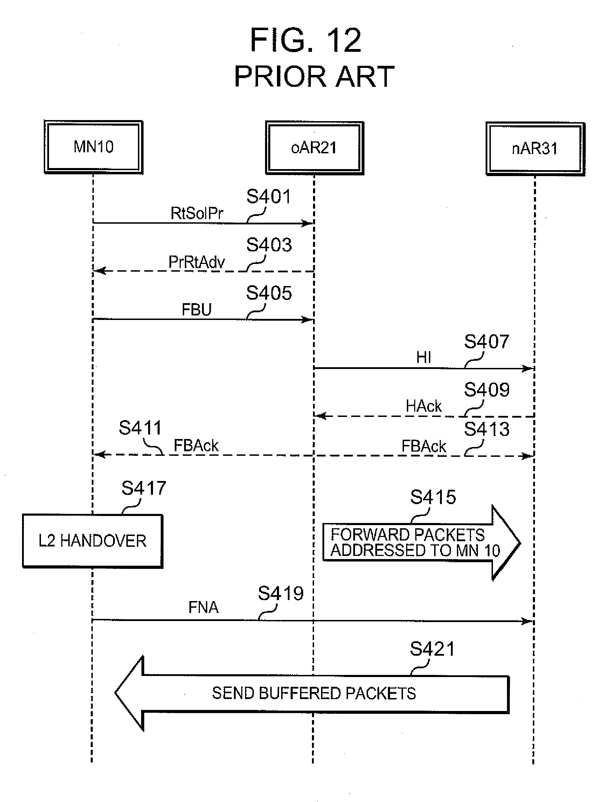

The operation of the conventional FMIP will be described briefly. While the FMIP has two operational modes according to whether the MN 10 receives an FBAck message at a link connected before handover (link before handover) or not, the description will be given of the (former) case where the MN 10 has sent an FBU message at a link before handover. FIG. 12 is a sequence chart showing the outline of the operational mode when the conventional MN 10 has sent an FBU message at a link before handover.

When, for example, the MN 10 starts moving to the area of the nAR 31 (radio coverage area 34 of the AP 32) from the area of the oAR 21 (radio coverage area 25 of the AP 23), a layer 2 detects the movement and this triggers a layer 3 handover. The determination of the handover initiation is executed by, for example, comparing the received signal strength from the AP 23 in an overlap area 26 with the received signal strength from the AP 32.

When information including the AP-ID (identification information of each AP) of the handover destination, AP 32, is provided by a layer 2, the MN 10 first sends the oAR 21 an RtSolPr (Router Solicitation for Proxy) message including the AP-ID of the AP 32 (step S401). The oAR 21 which has received the RtSolPr message acquires information of the nAR 31 by searching neighbor access routers or from information already retrieved (information held in the oAR 21).

Then, the oAR 21 sends a PrRtAdv (Proxy Router advertisement) message including information of the nAR 31 (e.g., information of the network prefix of the subnet 30 constituted by the nAR 31) to the MN 10 as a response to the RtSolPr message (step S403). The MN 10 which has received the PrRtAdv message generates an NCoA (New Care of Address) adequate in the subnet 30 by using the network prefix of the subnet 30 included in the PrRtAdv message and the link layer address of the MN 10 itself, and sends an FBU (Fast Binding Update) message including the NCoA to the oAR 21 (step S405).

The oAR 21 which has received the FBU message sends an HI (Handover Initiate) message to the nAR 31 to check if the NCoA generated by the MN 10 is valid in the subnet 30 (step S407). Upon reception of the HI message, the nAR 31 checks if the NCoA included in the HI message is valid, and if the NCoA is valid, then the nAR 31 sends an HAck (Handover Acknowledge) including a state of the result to the oAR 21 (step S409). When receiving the HAck message, the oAR 21 sends an FBAck (Fast Binding Acknowledgement) message informing the result to the MN 10 and the nAR 31 (steps S411, S413), and forwards a packet addressed to the MN 10 to the nAR 31 (step S415). When the packet addressed to the MN 10 is forwarded from the oAR 21, the nAR 31 performs packet buffering.

Thereafter, the MN 10 starts actual movement to the subnet 30, performs an L2 handover from, for example, the AP 23 to the AP 32 (step S417), and sends the nAR 31 an FNA (Fast Neighbor Advertisement) message for notification of connection to the nAR 31 and a transmission request for buffered packets (step S419). Upon reception of the FNA message, the nAR 31 sends the buffered packets addressed to the MN 10 to the MN 10 (step S421).

In a communication using a network, there are services including a QoS (Quality of Service) guarantee (in the specification, such a service is called additional service), and there are various communication protocols to realize the additional services. Among those various communication protocols, RSVP (Resource Reservation Protocol) is a protocol for performing QoS guarantee (see, for example, Non-Patent Document 3 to be described later). The RSVP performs bandwidth reservation over a path (flow) from a transmission side communication terminal which transmits data to a reception side communication terminal which receives data, thereby ensuring smooth data transmission from the transmission side communication terminal to the reception side communication terminal.

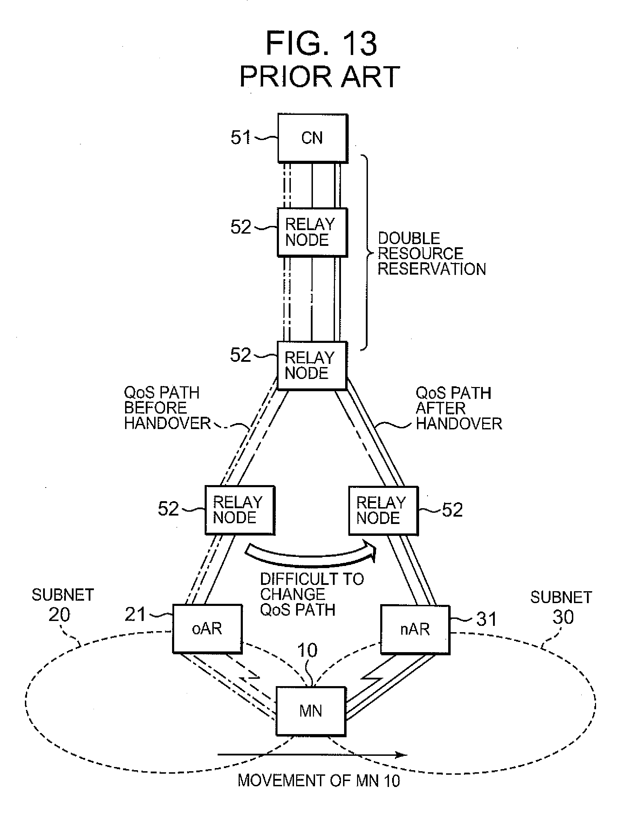

The MN 10 which performs handover between the subnets 20 and 30 requires the continuous additional services such as the QoS guarantee before and after handover. However the above-described RSVP cannot meet the above-described requirement in terms of the following points, and as a result, cannot cope with the movement of the MN 10. FIG. 13 is an exemplary diagram for explaining that the conventional RSVP technology cannot cope with the movement of an MN.

According to the RSVP, a QoS path is set in an end-to-end path to the MN 10 from a communication destination terminal (CN: Correspondent Node) 51 of the MN10, and data transfer is carried out by a plurality of relay nodes 52 which connect the end-to-end path based on the addresses of the MN 10 and the CN 51. Therefore, when the MN 10 performs handover between the subnets 20 and 30, and the CoA of the MN 10 changes, it is necessary to perform a process relating to address change in addition to flow change in the QoS path. However, the RSVP cannot cope with such a change, resulting in interruption of the QoS guarantee (first problem: difficulty in changing a QoS path). Further, in a case that a new QoS path is set, when there is an overlapping section of the QoS paths before and after handover, there may occur double reservation in the overlapping section (second problem; double reservation).

To overcome the problems, discussions on standardization of a new protocol called NSIS (Next Step in Signaling) in the IETF (Internet Engineering Task Force) are currently underway (see the following Non-Patent Document 4). The NSIS is expected to be useful for various additional services including QoS guarantee particularly in a mobile environment, and there are documents describing the requirements for QoS guarantee and mobility support as well as solutions for them (e.g., see the following Non-Patent Documents 5 to 7). While NSIS covers various functions in an ordinary static network environment as well as in a mobile environment, this specification focuses on a function to achieve mobility support for additional services, which is one of the NSIS functions. Additional services with mobility support can be achieved by NSIS implementation.
Non-Patent Document 1: D. Johnson, C. Perkins and J. Arkko, "Mobility Support in IPv6", draft-ietf-mobileip-ipv6-24, June 2003
Non-Patent Document 2: Rajeev Koodli "Fast Handovers for Mobile IPv6", draft-ietf-mobileip-fast-mipv6-08, October 2003
Non-Patent Document 3: R. Bradon, L. Zhang, S. Berson, S. Herzog and S. Jamin, "Resource Reservation Protocol-Version 1 Functional Specification", RFC 2205, September 1997.
Non-Patent Document 4: NSIS WG (http://www.ietf.org/html.charters/nsis-charter.html)
Non-Patent Document 5: H. Chaskar, Ed, "Requirements of a Quality of Service (QoS) Solution for Mobile IP", RFC3593, September 2003
Non-Patent Document 6: Sven Van den Bosch, Georgios Karagiannis and Andrew McDonald "NSLP for Quality-of-Service signalling", draft-ietf-nsis-qos-nslp-01.txt, October 2003
Non-Patent Document 7: X. Fu, H. Schulzrinne, H. Tschofenig, "Mobility issues in Next Step signaling", draft-fu-nsis-mobility-01.txt, October 2003

For example, let us consider that the MN 10, which is connected to the subnet 20 with QoS guarantee, performs handover to the subnet 30, and keeps the QoS guarantee after handover in the subnet 30 which has been provided before handover.

In this case, for the duration from when the MN 10 executes handoff with the subnet 20 before handover to when the MN 10 gets QoS guarantee in the subnet 30 after handover, the MN 10 cannot get QoS guarantee. The MN 10 gets no QoS guarantee at all, or the default QoS transfer process is executed for this duration.

As mentioned above, therefore, the MN 10 after handover should be quickly provided with an additional service, but the current discussions on NSIS in the IETF have not given any specific proposals on the initiation timing of an additional service after handover (e.g., timing to reestablish a QoS path). While Non-Patent Document 5 describes that the number of packets by the default QoS transfer during handover needs to be minimized, it discloses no specific solution means at all.

There may be a situation where an AR which has mobility-supported additional service functions such as NSIS and an AR which has no such functions co-existing in a network. In such a network, a consideration should be taken to avoid increase of useless communication traffic, e.g., a message that only an AR with a mobility-supported additional service functions like NSIS can understand to be sent to an AR which has no such functions.

### DISCLOSURE OF THE INVENTION

In view of the above-described problems, it is an object of the present invention to provide a communication handover method and a communication message processing method which enable a mobile node that performs handover to promptly and continuously get an additional service before and after the handover, and a program for causing a computer to execute those method, and a communication system.

To achieve the object, a communication handover method according to the invention is a communication handover method for use in a mobile node in a communication system in which a plurality of access routers each constituting a subnet are connected together over a communication network and at least one or more of access points forming a unique communication available area are connected to each of the plurality of access routers, the mobile node being so configured as to connect to the access router connected with the access points, through radio communication with the access points within the communication available area, the communication handover method comprising:
a handover determination step of determining that communication is switched over from an access point currently in communication to another access point;
an address configuration step of configuring an address adaptable in the subnet constituted by the access router which has control over the another access point determined in the handover determination step;
an information acquisition step of acquiring information on a node which can change a path relating to a mobility supported additional service established by a current subnet connection; and
an information transmission step of transmitting information on the node together with a message including the address configured in the address configuration step to the access router constituting the subnet which is currently connected.
This structure permits a mobile node (MN) that performs handover to send an access router (oAR) information on a node (mQNE) which can change a path relating to a mobility supported additional service so as to be able to promptly and continuously get an additional service before and after the handover.

Further, in the information transmission step, the communication handover method of the invention inserts the information on the node in the message including the address, and sends the message including the address and the information on the node, or sends the message including the address and the information on the node as different messages.
The structure permits a mobile node (MN) to send information on a node together with a message including an address which is adapted in a subnet after handover, or send information on a node at the same time as the transmission timing for the message including the address.

Further, the communication handover method of the invention uses an FBU message relating to an FMIP as the message including the address in the information transmission step.
This structure permits a mobile node (MN) to send information on a node using transmission of an FBU message relating to FMIP.

Furthermore, in the information acquisition step, the communication handover method of the invention uses information on a node which has NSIS implemented therein and is adjacent to the mobile node on the path, as the information on the node.
This structure permits a mobile node (MN) to surely grasp the node (mQNE) and surely acquire information on the node.

Further, the communication handover method of the invention uses an IP address of the node as the information on the node.
With this structure, the position of the node can be surely specified by the IP address of the node (mQNE).

Further, the invention provides a communication handover program for causing a computer to execute the communication handover method.

To achieve the object, a communication message processing method according to the invention is a communication message processing method for use in at least one of a plurality of access routers in a communication system in which the plurality of access routers each constituting a subnet are connected together over a communication network, at least one or more of access points forming a unique communication available area are connected to each of the plurality of access routers, and a mobile node present in the communication available area is configured in such a manner as to connect to the subnet constituted by the access router connected with the access points, through radio communication with the access points, the communication message processing method comprising:
an information reception step of receiving information on a node which can change a path relating to a mobility supported additional service established for a current mobile node, together with a message including an address adaptable in another subnet, from the mobile node which performs a handover to the another subnet from the subnet constituted by the access router; and
an information transmission step of transmitting information on the node received in the information reception step, together with the message including the address received in the information reception step, to the access router constituting another subnet to which the mobile node performs a handover.
With this structure, an access router (oAR) which has received from a mobile node (MN) information on a node (mQNE) which can change a path relating to a mobility supported additional service so that the mobile node that performs handover can promptly and continuously get an additional service before and after the handover, can forward the information on the node to an access router (nAR) to which the mobile node connects after handover.

Further, in the information reception step, the communication message processing method according to the invention inserts the information on the node in the message including the address, and receives a message including the information on the node, or receives the message including the address and the information on the node separately, and
in the information transmission step, the information on the node is inserted in the message including the address, and the message including the address and the information on the node are sent, or the message including the address and the information on the node are sent as different messages.
The structure permits a mobile node (MN) and an access router (oAR) to send information on a node together with a message including an address which is adapted in a subnet after handover, or send information on the at the same time as the transmission timing for the message including the address.

Further, the communication message processing method of the invention uses an FBU message relating to an FMIP as the message including the address in the information reception step, and uses an Hi message relating to the FMIP as the message including the address in the information transmission step.
This structure permits a mobile node (MN) to send information on a node using transmission of an FBU message relating to FMIP, and permits an access router (oAR) to send information on the node using an HI message relating to FMIP.

To achieve the object, a communication message processing method according to the invention is a communication message processing method for use in at least one of a plurality of access routers in a communication system in which the plurality of access routers each constituting a subnet are connected together over a communication network, at least one or more of access points forming a unique communication available area are connected to each of the plurality of access routers, and a mobile node present in the communication available area is configured in such a manner as to connect to the subnet constituted by the access router connected with the access points, through radio communication with the access points, the communication message processing method comprising:
an information reception step of receiving a message including an address adaptable in another subnet from the mobile node which performs a handover to the another subnet from the subnet constituted by the access router;
an information acquisition step of acquiring information on a node which can change a path relating to a mobility supported additional service established by a current subnet connection; and
an information transmission step of transmitting information on the node received in the information reception step, together with the message including the address received in the information reception step, to the access router constituting another subnet to which the mobile node performs a handover.
With this structure, an access router (oAR) which has received a message including an address associated with handover from a mobile node (MN) can acquire information on a node (mQNE) which can change a path for a mobile node relating to a mobility supported additional service, and can send the information on the node to an access router (nAR) to which the mobile node s connected after handover, so that the mobile node that performs handover can promptly and continuously get an additional service before and after the handover.

Further, in the information transmission step, the communication message processing method of the invention inserts the information on the node in the message including the address, and sends the message including the address and the information on the node, or sends the message including the address and the information on the node as different messages.
The structure permits an access router (oAR) to send information on a node together with a message including an address which is adapted in a subnet after handover, or send information on the at the same time as the transmission timing for the message including the address.

Furthermore, the communication message processing method of the invention uses an FBU message relating to an FMIP as the message including the address in the information transmission step.
This structure permits an access router (oAR) to send information on a node using transmission of an HI message relating to FMIP.

To achieve the object, a communication message processing method according to the invention is a communication message processing method for use in at least one of a plurality of access routers in a communication system in which the plurality of access routers each constituting a subnet are connected together over a communication network, at least one or more of access points forming a unique communication available area are connected to each of the plurality of access routers, and a mobile node present in the communication available area is configured in such a manner as to connect to the subnet constituted by the access router connected with the access points, through radio communication with the access points, the communication message processing method comprising:
an information reception step of receiving a message including an address adaptable in another subnet from the mobile node which performs a handover to the another subnet from the subnet constituted by the access router; and
a path establishment step in which the access router has a function of establishing a path relating to a mobility supported additional service established by a current subnet connection, a message to request establishment of the path is sent to the access router constituting another subnet to which the mobile node performs a handover, and a new path relating to a mobility supported additional service with the access router constituting another subnet to which the mobile node performs a handover.
With this structure, an access router (oAR) which has received a message including an address associated with handover from a mobile node (MN) can establish a new path for the mobile node with an access router (nAR) to which the mobile node connects after handover, so that the mobile node that performs handover can promptly and continuously get an additional service before and after the handover.

Further, the communication message processing method of the invention comprises:
a tunnel establishment step of establishing a tunnel for packet forwarding from the access router to the access router constituting the another subnet, and wherein
the new path between the access router and the access router constituting another subnet is established by using the tunnel established in the tunnel establishment step.
This structure can establish a new path using a tunnel (oAR-nAR tunnel) between access routers which are set by the conventional FMIP, for example.

To achieve the object, a communication message processing method according to the invention is a communication message processing method for use in at least one of a plurality of access routers in a communication system in which the plurality of access routers each constituting a subnet are connected together over a communication network, at least one or more of access points forming a unique communication available area are connected to each of the plurality of access routers, and a mobile node present in the communication available area is configured in such a manner as to connect to the subnet constituted by the access router connected with the access points, through radio communication with the access points, the communication message processing method comprising:
an information reception step of receiving information on a node which can change a path relating to a mobility supported additional service established for a current mobile node, together with a message including an address adaptable in the subnet, from the access router constituting another subnet to which the mobile node that performs a handover to the subnet constituted by the access router is connected before handover;
a path establishment step in which the access router has a function of establishing a path relating to a mobility supported additional service established by a current subnet connection, a message to request establishment of a new path relating to a mobility supported additional service with the access router to the node based on the information on the node.
With this structure, an access router (nAR) can receive from an access router (oAR) information on a node (mQNE) which can change a path for a mobile node relating to a mobility supported additional service, and can establish a new path for the mobile node with this node.

To achieve the object, a communication message processing method according to the invention is a communication message processing method for use in at least one of a plurality of access routers in a communication system in which the plurality of access routers each constituting a subnet are connected together over a communication network, at least one or more of access points forming a unique communication available area are connected to each of the plurality of access routers, and a mobile node present in the communication available area is configured in such a manner as to connect to the subnet constituted by the access router connected with the access points, through radio communication with the access points, the communication message processing method comprising:
a request reception step in which the access router has a function of establishing a path relating to a mobility supported additional service, and a message to request establishment of a new path relating to the mobility supported additional service with the access router is received from the access router constituting another subnet to which the mobile node that performs a handover to the subnet constituted by the access router is connected before handover; and
a path establishment step in which the new path is established upon reception of the message to request establishment of the new path in the request reception step.
With this structure, according to a request from an access router (oAR) having a function of changing a path for a mobile node relating to a mobility supported additional service, an access router (nAR) can establish a new path for the mobile node with this access router.

Further, the communication message processing method of the invention comprises a step of establishing a path relating to the mobility supported additional service when the mobile node performs a handover so as to connect to the subnet constituted by the access router.
With this structure, a path associated with a mobility supported additional service is established between an access router (nAR) to which a mobile node connects after handover and the mobile node.

Further, the communication message processing method of the invention comprises a step of searching for a path different from the new path and establishing the path different from the new path, after the mobile node connects to the subnet constituted by the access router.
This structure provides a mobile node after handover with an optimal path associated with a mobility supported additional service.

The invention provides a communication handover program for causing a computer to execute the communication message processing method.

To achieve the object, a communication system according to the invention is a communication system in which the plurality of access routers each constituting a subnet are connected together over a communication network, at least one or more of access points forming a unique communication available area are connected to each of the plurality of access routers, and a mobile node present in the communication available area is configured in such a manner as to connect to the subnet constituted by the access router connected with the access points, through radio communication with the access points, wherein
the mobile node or the access router constituting a subnet to which the mobile node is connected before handover has a function of acquiring information on a node which changes a path relating to a mobility supported additional service, and
the information on the node is sent together with a message relating to FMIP to an access router constituting a subnet to which the mobile node is connected after handover, from the mobile node or the access router constituting a subnet to which the mobile node is connected before handover, and a new path replacing the path established for the mobile node before handover is established between the access router constituting the subnet to which the mobile node is connected after handover and the node.
With this structure, an access router (nAR) can receive from an access router (oAR) information on a node (mQNE) which can change a path for a mobile node relating to a mobility supported additional service, and can establish a new path for the mobile node with this node.

To achieve the object, a communication system according to the invention is a communication system in which the plurality of access routers each constituting a subnet are connected together over a communication network, at least one or more of access points forming a unique communication available area are connected to each of the plurality of access routers, and a mobile node present in the communication available area is configured in such a manner as to connect to the subnet constituted by the access router connected with the access points, through radio communication with the access points, wherein
the access router constituting a subnet to which the mobile node is connected before handover has a function of establishing a path relating to a mobility supported additional service, and when a message relating to FMIP is sent to the access router constituting the subnet to which the mobile node is connected before handover, a new path replacing the path established for the mobile node before handover is established between the access router constituting the subnet to which the mobile node is connected before handover and the access router constituting the subnet to which the mobile node is connected after handover.
With this structure, according to a request from an access router (oAR) having a function of changing a path for a mobile node relating to a mobility supported additional service, an access router (nAR) can establish a new path for the mobile node with this access router.

The invention provides a communication handover method and a communication message processing method, which have the above-described structures, and a program and a communication system for causing a computer to execute those methods, and has an advantage such that a mobile node which performs handover can promptly and continuously get an additional service before and after the handover.

### BRIEF DESCRIPTION OF THE DRAWINGS

FIG. 1 is a diagram showing one example of the structure of a communication system according to an embodiment of the invention;
FIG. 2 is a block diagram showing the first structure of an MN according to an embodiment of the invention;
FIG. 3 is a block diagram showing the structure of an nAR according to an embodiment of the invention;
FIG. 4 is a block diagram showing the structure of an mQNE according to an embodiment of the invention;
FIG. 5 is a block diagram showing the first structure of an oAR according to an embodiment of the invention;
FIG. 6 is a block diagram showing the second structure of an oAR according to an embodiment of the invention;
FIG. 7 is a sequence chart for explaining the operation of the embodiment of the invention;
FIG. 8A is a diagram showing a format for sending adjacent mQNE information to an oAR from an MN in the embodiment of the invention, and showing an FBU message including adjacent mQNE information;
FIG. 8B is a diagram showing a format for sending adjacent mQNE information to an oAR from an MN in the embodiment of the invention, and showing information including an FBU message and adjacent mQNE information;
FIG. 9A is a diagram showing a format for sending adjacent mQNE information to an nAR from an oAR in the embodiment of the invention, and showing an HI message including adjacent mQNE information;
FIG. 9B is a diagram showing a format for sending adjacent mQNE information to an nAR from an oAR in the embodiment of the invention, and showing information including an HI message and adjacent mQNE information;
FIG. 10 is a diagram showing presence/absence of adjacent mQNE information and whether the invention classified by the functions of an oAR is realizable/non-realizable;
FIG. 11 is an exemplary diagram showing the structure of a radio communication system common to the conventional techniques;
FIG. 12 is a sequence chart illustrating the outline of the operational modes of the FMIP when the MN of the conventional technique sends an FBU message from a link before handover; and
FIG. 13 is an exemplary diagram for explaining how an RSVP according to the conventional technique cannot cope with movement of an MN.

### BEST MODE FOR CARRYING OUT THE INVENTION

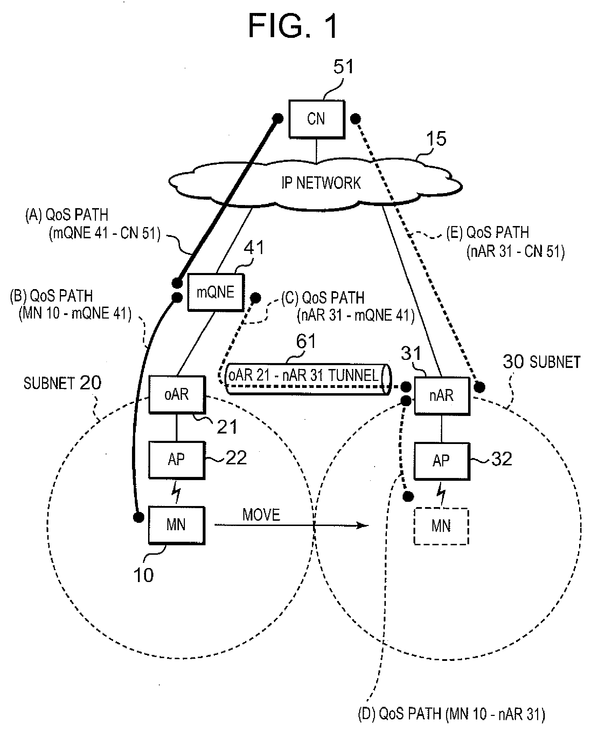

Embodiments of the invention will now be described with reference to the accompanying drawings. FIG. 1 is a diagram showing one example of the structure of a communication system according to one embodiment of the invention. The communication system as shown in FIG. 1 includes an IP network (communication network) 15, such as the Internet, a plurality of subnets 20, 30 which connect to the IP network 15, and a mobile node (MN: Mobile Node) 10 which can connect to any of the subnets 20, 30. The following will describe a case where the MN 10 moves to change connection (handover) to the subnet 30 from the subnet 20.

The subnets 20, 30 respectively comprise an oAR 21 and an nAR 31 which have control over the respective access points. An access router of the subnet 20 to which the MN 10 has connected before handover is called oAR (old Access Router) 21, and an access router of the subnet 30 to which the MN 10 will connect after handover is called nAR (new Access Router) 31.

Next, the outline of the invention will be described referring to FIG. 1. The invention allows the MN 10 to promptly and continuously get an additional service (e.g., QoS) before and after the handover, at the time of performing a handover using FMIP.

Suppose that a QoS path has been established between the MN 10 and a CN 51 before handover at which time the MN 10 is connected to the subnet 20. That is, as shown in FIG. 1, a QoS path (A) and a QoS path (B) through an mQNE 41 to be discussed later are established between the MN 10 and the CN 51 to ensure a QoS guarantee. A QoS guarantee relating to packets to the MN 10 is given by mQNE 41 - CN 51 in the QoS path (A), and a QoS guarantee relating to packets to the MN 10 is given by MN 10 - mQNE 41 in the QoS path (B).

When the MN 10 performs a handover to the subnet 30 using the FMIP, the same QoS as has been provided before the handover can be provided to the MN 10 connected to the subnet 30 by leaving the QoS path (A) and changing the QoS path (B) to a QoS path (C) and a QoS path (D). A QoS guarantee relating to packets to the MN 10 is given by mQNE 41 - nAR 31 in the QoS path (C), and a QoS guarantee relating to packets to the MN 10 is given by MN 10 - nAR 31 in the QoS path (D). At this time, it is possible to establish the QoS path (C) using an oAR 21 - nAR 31 tunnel 61 which is established for packet forwarding in the FMIP.

In the FMIP, processes of the oAR 21 and the nAR 31 can start before an L2 handover by the MN 10, and the QoS path (C) can be established before the MN 10 performs a handover to a new subnet 30. With regard to the QoS path (D), the nAR 31 can prepare for establishment before the MN 10 makes a new connection thereto. This establishes the QoS path (C) and the QoS path (D), and promptly establishes a QoS path (A) + QoS path (C) + QoS path (D) between the MN 10 and the CN 51 to ensure QoS immediately after the MN 10 performs a handover to the subnet 30.

The QoS path (A) + QoS path (C) + QoS path (D) between the MN 10 and the CN 51 need not be used permanently, and a better QoS path (e.g., a QoS path (E) between the nAR 31 and the CN 51 without intervening the oAR 21) may be found to change the QoS path thereto later.

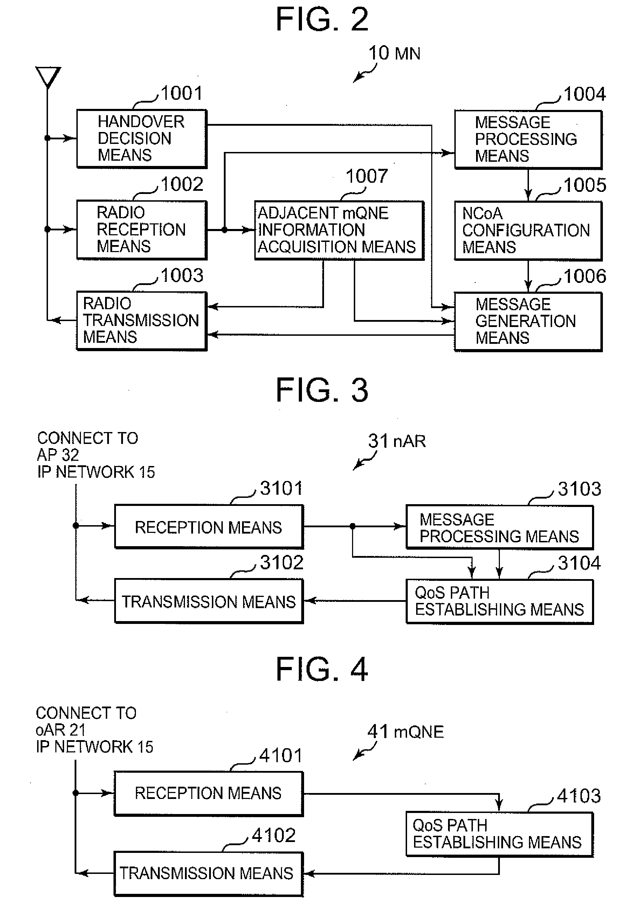

The function of the MN 10 will be explained next. FIG. 2 is a block diagram showing the structure of an MN according to the embodiment of the invention. While the individual functions of the MN 10 are illustrated in blocks in FIG. 2, the functions can be achieved by hardware and/or software. In particular, the main processes of the invention (processes in the individual steps illustrated in FIG. 7 to be discussed later) can be achieved by a computer program.

The MN 10 shown in FIG. 2 has handover decision means 1001, radio reception means 1002, radio transmission means 1003, message processing means 1004, NCoA configuration means 1005, message generation means 1006, and adjacent mQNE information acquisition means 1007.

The handover decision means 1001 is means that determines initiation of an L2 handover based on an arbitrary condition, such as execution of an L2 handover to an AP having the highest radio wave intensity (switching of connection of an AP of a correspondent node) by comparing, for example, the intensities of radio waves from different APs.

The radio reception means 1002 and the radio transmission means 1003 are means for respectively performing data reception and data transmission by radio communication, and include various functions needed for radio communication.

The message processing means 1004 is means for processing reception messages relating to the FMIP (PrRtAdv message and FBAck message).

The NCoA configuration means 1005 is means for statelessly generating an NCoA which can match with a subnet constituted by an AR where the AP at the L2 handover destination belongs to, based on information included in the received PrRtAdv message (e.g., information on the network prefix of a subnet). The MN 10 may hold information on the network prefix or the like of a subnet constituted by an AR to be a handover destination beforehand, and generate an NCoA.

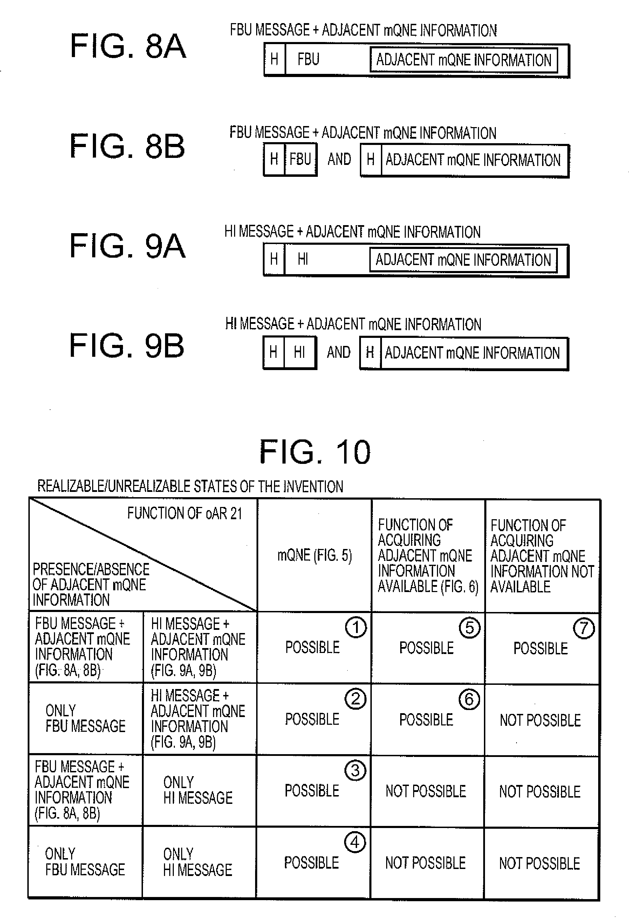

The message generation means 1006 is means for performing a process of generating transmission messages relating to the FMIP (RtSolPr message and FBU message), and a process of generating information including adjacent mQNE information acquired by the adjacent mQNE information acquisition means 1007. Note that the information including the adjacent mQNE information is sent to the oAR 21 at the time of sending an FBU message using one of the formats in FIG. 8A and FIG. 8B. That is, the MN 10 can employ either a method of generating and transmitting an FBU message including adjacent mQNE information (see FIG. 8A), or a method of generating a message including adjacent mQNE information separately from an FBU message, and transmitting the message and the FBU message at the same time (see FIG. 8B). When a message including adjacent mQNE information is generated separately from an FBU message and is transmitted, it is desirable to insert information indicating association with the FBU message in the adjacent mQNE information.

The adjacent mQNE information acquisition means 1007 is means for acquiring information relating to the mQNE 41 adjacent to the MN 10 on a QoS path (adjacent mQNE information). While the MN 10 can realize the adjacent mQNE information acquisition means 1007 by, for example, implementing the aforementioned NSIS, adjacent mQNE information may be acquired by other methods. The adjacent mQNE information is information to identify the mQNE 41, and it can be the IP address of the mQNE 41 as one example. While information relating to the mQNE 41 adjacent to the MN 10 on a QoS path is acquired, the node should not necessarily be adjoining to the MN 10, and information relating to an arbitrary node on a QoS path, which, like the mQNE 41, has a QoS establishing capability such as NSIS may be used as adjacent mQNE information. Further, when there is an arbitrary node not present on a QoS path but capable of changing the QoS path established to the MN 10, information relating to the arbitrary node may be used as adjacent mQNE information.

As apparent from the above, the MN 10 shown in FIG. 2 is a mobile node implemented with an FMIP expanded so as to be able to send adjacent mQNE information and an FBU message simultaneously.

The functions of an nAR 31 constituting the subnet 30 to which the MN 10 is to be connected after handover will be described next. FIG. 3 is a block diagram showing the structure of the nAR according to the embodiment of the invention. The individual functions of the nAR 31 shown in FIG. 3, like those of the MN 10 shown in FIG. 2, can be achieved by hardware and/or software. In particular, the main processes of the invention (e.g., processes in the individual steps illustrated in FIG. 7 to be discussed later) can be achieved by a computer program.

The nAR 31 shown in FIG. 3 has reception means 3101, transmission means 3102, message processing means 3103, and QoS path establishing means 3104. The reception means 3101 and the transmission means 3102 are connected to an AP 32 which is under the control of the nAR 31, and the IP network 15 which is an external network, and respectively perform data reception and data transmission.

The message processing means 3103 is means for processing a message relating to the FMIP (e.g., an HI message) when the reception means 3101 receives the message from the oAR 21. Specific processes to be executed by the message processing means 3103 include, for example, checking of the validity of an NCoA included in the message (checking if it is usable by the subnet 30 constituted by the nAR 31). When the validity of the NCoA is acknowledged and adjacent mQNE information is included in the HI message (see FIG. 9A), or when adjacent mQNE information associated with the HI message (see FIG. 9B), the message processing means 3103 requests the QoS path establishing means 3104 to establish a QoS path relating the MN 10 which is expected to move to the subnet 30. Though not illustrated, the nAR 31 also has message generation means corresponding to the message processing means 3103.

The QoS path establishing means 3104 is means capable of starting a process of changing the QoS path of the MN 10 or establishing a QoS path between the nAR 31 and another node by some method (e.g., a method which is expected by be defined by NSIS) upon reception of a request to establish the QoS path relating to the MN 10. The QoS path establishing means 3104 can be realized by implementation of, for example, NSIS. The QoS path establishing means 3104 can notify an mQNE 41, which is specified by adjacent mQNE information, of a change in the QoS path relating to the MN 10, and make a request to establish a new QoS path (e.g., the QoS path (C) shown in FIG. 1) between the mQNE 41 and the nAR 31.

Although the nAR 31 has the QoS path establishing means 3104 capable of performing QoS guarantee, one of additional services, in an example given here, the QoS path establishing means 3104 can be expanded to means that can realize an arbitrary additional service to be supported by, for example, the NSIS. The QoS path establishing means 3104 is means capable of starting a process of changing the QoS path of the MN 10, and should not necessarily perform the process of changing the QoS path of the MN 10 by itself. That is, upon reception of a request to establish a QoS path relating to the MN 10 from the message processing means 3103, the QoS path establishing means 3104 may request other nodes having a function of changing the QoS path of the MN 10 to start the process of changing the QoS path of the MN 10.

As described above, the nAR 31 shown in FIG. 3 is an access router which has the conventional FMIP implemented therein and is configured in such a way as to be able to initiate a process of changing a QoS path relating to the MN 10 upon reception of an HI message from the oAR 21.

The functions of the mQNE 41 adjoining to the MN 10 on the QoS path between the MN 10 and the CN 51 will be described next. FIG. 4 is a block diagram showing the structure of the mQNE according to the embodiment of the invention. The individual functions of the mQNE 41 shown in FIG. 4, like those of the MN 10 shown in FIG. 2, can be achieved by hardware and/or software. In particular, the main processes of the invention (e.g., processes in the individual steps illustrated in FIG. 7 to be discussed later) can be achieved by a computer program.

The mQNE 41 shown in FIG. 4 has reception means 4101, transmission means 4102, and QoS path establishing means 4103. The reception means 4101 and the transmission means 4102 are connected to the oAR 21 and the IP network 15 and perform data reception and data transmission. The QoS path establishing means 4103 has the same function as the QoS path establishing means 3104 shown in FIG. 3, and can change the QoS path to the MN 10 (the QoS path (B) shown in FIG. 1) and to a QoS path to the nAR 31 (the QoS path (C) shown in FIG. 1). The QoS path establishing means 4103 may be realized by implementation of a mobility supported additional service like NSIS. While the name "mQNE (mobile QoS NSIS Entity) used in the specification indicates an entity having an NSIS corresponding to a mobile QoS implemented therein, the NSIS should not necessarily be implemented and the mQNE 41 has only to have a function of realizing a mobility supported additional service conforming to the NSIS function.

As described above, the mQNE 41 shown in FIG. 4 is a node implemented with a capability of achieving a mobility supported additional service like NSIS.

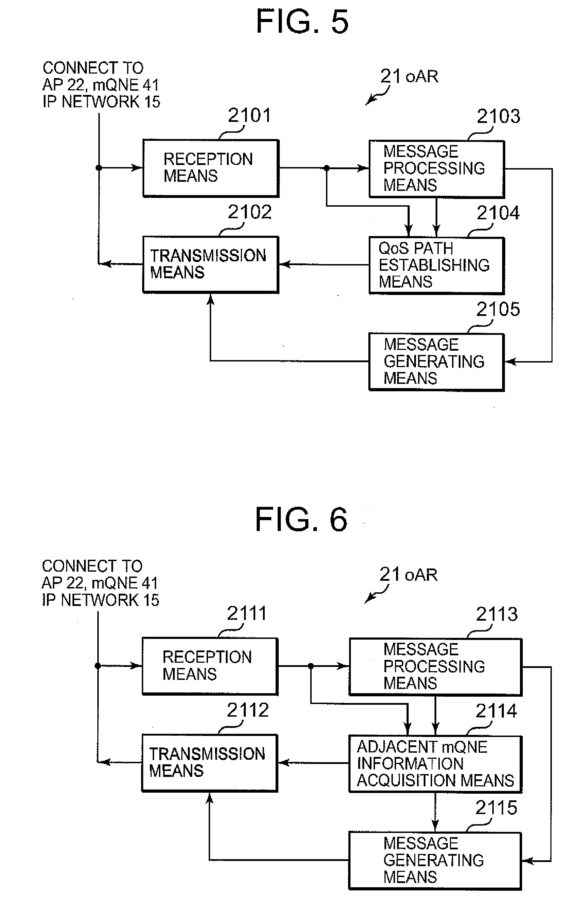

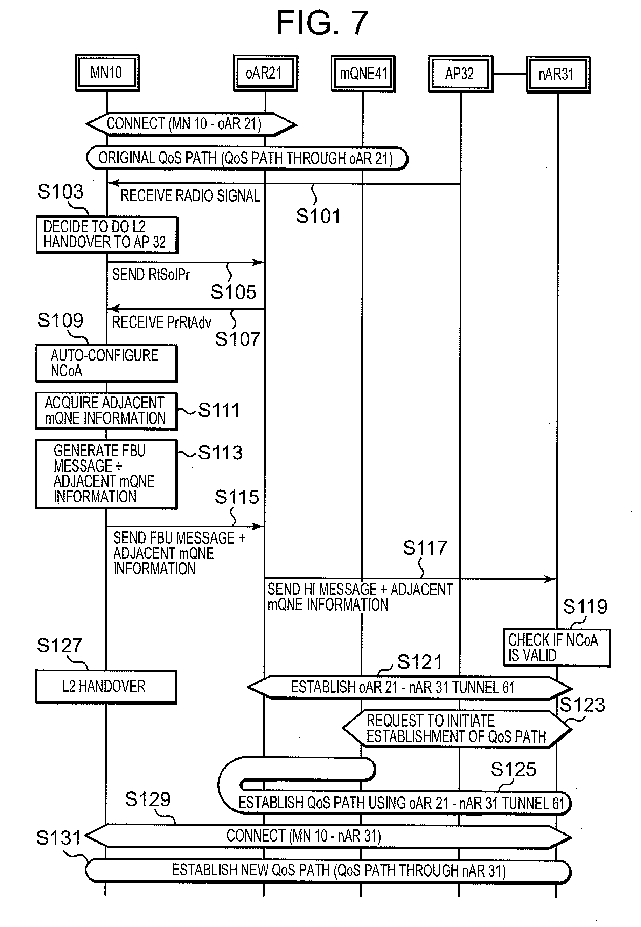

The functions of an oAR 21 constituting the subnet 20 to which the MN 10 has been connected before handover will be described next. FIGS. 5 and 6 are block diagrams showing the first structure and the second structure of the oAR according to the embodiment of the invention. The individual functions of the oAR 21 shown in FIGS. 5 and 6, like those of the MN 10 shown in FIG. 2, can be achieved by hardware and/or software. In particular, the main processes of the invention (e.g., processes in the individual steps illustrated in FIG. 7 to be discussed later) can be achieved by a computer program.

The oAR 21 shown in FIG. 5 has reception means 2101, transmission means 2102, message processing means 2103, QoS path establishing means 2104 and message generating means 2105. The reception means 2101 and the transmission means 2102 are connected to an AP 22 which is under the control of the oAR 21, the mQNE 41, and the IP network 15 which is an external network, and respectively perform data reception and data transmission.

The message processing means 2103 is means for processing a message relating to the FMIP (e.g., a RtSolPr message, FBU message, HAck message, etc.) when the reception means 2101 receives the message from the MN 10 or the nAR 31. The message generating means 2105 is means for generating a message relating to FMIP (e.g., a PrRtAdv message, HI message, etc.) to be sent to the MN 10 or the nAR 31.

The QoS path establishing means 2104 is means capable of starting a process of changing the QoS path of the MN 10 or establishing a QoS path between the nAR 31 and another node by some method (e.g., a method which is expected by be defined by NSIS) upon reception of a request to establish the QoS path relating to the MN 10 from the message processing means 2103 . The QoS path establishing means 2104 can be realized by implementation of, for example, NSIS. As apparent from the structure of the mQNE 41 shown in FIG. 4, the oAR 21 shown in FIG. 5 includes the function of the mQNE 41 shown in FIG. 4, i.e., the oAR 21 becomes an mQNE 41 adjoining to the MN 10 on the QoS path.

As described above, the oAR 21 shown in FIG. 5 is an access router which is implemented with the FMIP and also with a capability of achieving a mobility supported additional service like NSIS. The oAR 21 shown in FIG. 5 is also the mQNE 41 as mentioned above.

The oAR 21 shown in FIG. 6 has reception means 2111, transmission means 2112, message processing means 2113, QoS path establishing means 2114 and message generating means 2115. The reception means 2111 and the transmission means 2112 are identical to the reception means 2101 and the transmission means 2102 shown in FIG. 5.

The message processing means 2113 is means for processing a message relating to the FMIP (e.g., a RtSolPr message, FBU message, HAck message, etc.) when the reception means 2111 receives the message from the MN 10 or the nAR 31. The message generating means 2115 is means for generating a message relating to FMIP (e.g., a PrRtAdv message, HI message, etc.) to be sent to the MN 10 or the nAR 31. It is desirable that the message processing means 2113 be able to perform processes relating to an FBU message including adjacent mQNE information shown in FIG. 8A and adjacent mQNE information associated with an FBU message shown in FIG. 8B. The message generating means 2115 is expanded so as to be able to perform a process of generating an HI message including adjacent mQNE information shown in FIG. 9A and adjacent mQNE information associated with an HI message shown in FIG. 9B.

The QoS path establishing means 2114, like the adjacent mQNE information acquisition means 1007 shown in FIG. 2, is means for acquiring adjacent mQNE information relating to the mQNE 41 adjacent to the MN 10 on a QoS path. The QoS path establishing means 2114 may be realized by using, for example, a CARD (Candidate Access Router Discovery) technique, or may be configured in such a way that information relating to a nearly mQNE may be input beforehand so that information relating to a desired mQNE 41 can be acquired by referring to the input mQNE-related information.

As described above, the oAR 21 shown in FIG. 6 is an access router which is implemented with the FMIP expanded to be able to simultaneously transmit at least adjacent mQNE information and an HI message, and also with a capability of acquiring information on an mQNE 41 adjoining to the MN 10 on the QoS path relating to the MN 10 (adjacent mQNE information) by CARD, for example, or other methods.

The operation of the embodiment of the invention will be described next by referring to a sequence chart in FIG. 7. FIG. 7 is a sequence chart for explaining the operation of the embodiment of the invention. The sequence chart shown in FIG. 7 shows, along the time axis, individual processes of the MN 10, the oAR 21, the mQNE 41, the AP 32 and the nAR 31, when the MN 10 performs a handover to the subnet 30 from the subnet 20.

First, the initial state is set wherein the MN 10 is connected to the subnet 20 and a QoS path with the CN 51 is established to ensure a QoS guarantee. In case where the MN 10 moves toward the subnet 30 from the subnet 20, when the radio wave from the AP 22 (AP belonging to the subnet 20) currently in communication becomes weaker, the MN 10 starts searching for another communicatable AP. Then, it becomes possible to listen to the radio wave (radio signal) from the AP 32 (step S101: receive a radio signal), i.e., it finds the AP 32 (AP belonging to the subnet 30).

Then, when the handover decision means 1001 of the MN 10 compares the received signal strength from the AP 22 with the received signal strength from the AP 32, and finds out that the radio wave from the AP 32 is stronger, for example, it decides to switch connection of the AP at the transmission destination (L2 handover) (step S103: decide to perform L2 handover to AP 32). In the embodiment, the condition for deciding execution of an L2 handover has been explained as the use of the result of comparison of received signal strength by the handover decision means 1001, the condition is not limited, and execution of an L2 handover may be determined based on another condition.

When it is determined that the L2 handover is to be performed by the handover decision means 1001, the MN 10 generates an RtSolPr message based on the link layer address of the AP 32 acquired by, for example, reception of the beacon from the AP 32, and sends the message to the oAR 21 (step S105: sending of RtSolPr). The oAR 21 that received the RtSolPr message from the MN 10 generates a PrRtAdv message which includes the network prefix, and the prefix length of the subnet 30 acquired by some method (not particularly specified), and sends the message back to the MN 10 (step S107: reception of the PrRtAdv message).

The MN 10 combines the network prefix and prefix length in the received PrRtAdv message with the link layer address or the like of the MN 10, and generates an NCoA which can match the subnet 30 constituted by the nAR 31 (step S109: auto-configure of NCoA). The processes so far are the same operations as the operations in the conventional FMIP.

Next, the MN 10 acquires information (adjacent mQNE information) on the adjacent mQNE41 over the QoS path established between the CN 51 (step S111: acquire information on adjacent mQNE). As explained above, the adjacent mQNE information is, for example, the IP address of the mQNE 41. The MN 10 generates an FBU message and the adjacent mQNE information by the format illustrated in FIGS. 8A and 8B (step S113: generate FBU message + adjacent mQNE information), and sends the adjacent mQNE information to the oAR 21 together with sending of the FBU message (step S115: send FBU message + adjacent mQNE information).

The oAR 21 which received the FBU message from the MN 10 sends an HI message to the nAR 31 based on the conventional FMIP protocol. At this time, the oAR 21 sends the adjacent mQNE information received from the MN 10 together with the FBU message to the nAR 31 along with sending of the HI message by the format illustrated in FIGS. 8A and 8B (step S117: send HI message + adjacent mQNE information). Based on the conventional FMIP protocol, the nAR 31 checks the validity of the NCoA included in the HI message and generated by the MN 10 (step S119: check whether NCoA is valid). At this time, the nAR 31 notifies an NCoA check results by an HAck message which is a response to the HI message, and sends a candidate or the like of the NCoA allocatable to the MN 10 when the NCoA is invalid, but illustration of a sending process of the HAck will be omitted. A process when the validity of the NCoA is confirmed at the step S119 will be explained below.

After the validity of the NCoA of the MN 10 is confirmed, a tunnel for forwarding a packet from the oAR 21 to nAR 31 is established as same as the operation in the conventional FMIP (step S121: establishment of oAR 21 - nAR 31 tunnel 61). The nAR 31 can figure out the identification information on mQNE 41 relating to the QoS path change of the MN 10 from the adjacent mQNE information, and requests the mQNE 41 to start establishment of the QoS path for the MN 10 between the nAR 31 and the mQNE 41 (step S123: request of starting establishment of QoS path).

The mQNE 41 receives the request of starting establishment of the QoS path, and establishes the QoS path which utilizes the oAR 21 - nAR 31 path between the nAR 31 (step S125: establish QoS path utilizing oAR 21 - nAR 31 tunnel 61). The QoS path is established by utilizing the oAR 21 - nAR 31 tunnel 61, but it may not be necessary to utilize the oAR 21 - nAR 31 tunnel 61. It is desirable that the mQNE 41 should invalidate the QoS path (Qos path (B) illustrated in FIG. 1) between the MN 10 connected to the subnet 20, on simultaneously establishing the QoS path (Qos path (C) illustrated in FIG. 1) for the MN 10 between the nAR 31.

By the aforementioned processes, when the MN 10 performs the first handover utilizing the FMIP, change of the QoS path taking the mQNE 41 as a base point is performed, and the QoS path (QoS path (A) + QoS path (C) illustrated in FIG. 1) of the MN 10 is established between the nAR 31 which forms the subnet 30 to be connected after handover and the CN 51. The Mn 10 performs L2 handover independently from the QoS path establishment process (step S127: L2 handover), and connects to the new subnet 30 (step S129: connection (MN 10 - nAR 31)). After the MN 10 connects to the subnet 30, the QoS path (QoS path (D) illustrated in FIG. 1) is established between the MN 10 and the nAR 31, and the QoS path (QoS path (A) + Qos path (C) + Qos path (D) illustrated in FIG. 1) is established between the MN 10 after handover to the subnet 30 and the CN 51 (step S131: establish new QoS path (QoS path through nAR 31)). After that, an appropriate QoS path (QoS path (E) illustrated in FIG. 1) which does not pass through the oAR 21 and the mQNE 41 may be newly established as mentioned above.

As explained above, according to the sequence chart illustrated in FIG. 7, as the MN 10 sends the adjacent mQNE information to the oAR 21 by utilizing the FBU message or sending it at a timing of the FBU message, and the oAR 21 forwards the adjacent mQNE information received from the MN 10 to the nAR 31 by utilizing the HI message or sending it at a timing of the HI message, it becomes possible that the nAR 31 figures out the identification information of the mQNE 41 which becomes the base point of the QoS path of the MN 10, and promptly establishes the QoS path of the MN 10 between the mQNE 41.

Next, with reference to the sequence chart illustrated in the aforementioned FIG. 7, functions that the MN 10, oAR 21, and nAR 31 need to have will now be explained in the cases with/without the adjacent mQNE information to be sent simultaneously with sending of the FBU message and/or the HI message. FIG. 10 illustrates a diagram which simplifies a corresponding relationship to be discussed below (a diagram which represents possibility/impossibility of the present invention sorted by presence or absence of the adjacent mQNE information and the function of oAR).

### <When oAR 21 is mQNE 41>

For example, when the oAR 21 has the structure illustrated in FIG. 5, the oAR 21 becomes the same as the mQNE 41 as mentioned above. In this case, it is possible to realize the present invention rather than a mode where the oAR 21 illustrated in FIG. 7 forwards the adjacent mQNE information received from the MN 10 to the nAR 31 (field of encircled number 1 in FIG. 10).

For example, in a case where the oAR 21 is structured in such a manner as to receive the FBU message regulated by the conventional FMIP and then request starting of establishment of the QoS path to the nAR 31 of the subnet 30 to which the MN 10 moves next, realization of the invention becomes possible (encircled number 2 and encircled number 4 in FIG. 10). In this case, the process of the MN 10 in the step S111 becomes unnecessary, and the MN 10 may send a conventional FBU message in the step S115. The oAR 21 may or may not send the adjacent mQNE information simultaneously with the HI message to the nAR 31 in the step S117. When the oAR 21 sends a conventional HI message, it is necessary that the oAR 21 (=mQNE 41) requests starting of establishment of the QoS path in the step S123 to the nAR 31, and, for example, it is possible to send the HI message which includes information on request of starting establishment of the QoS path. In contrast, when the oAR 21 send the HI message + the adjacent mQNE information, the request of starting establishment of the QoS path in the step S123 may be performed by either oAR 21 or nAR 31.

Even if the adjacent mQNE information is not forwarded to the nAR 31 when the FBU message + the adjacent mQNE information are received from the MN 10, realization of the invention is possible (field of encircled number 3 in FIG. 10). In this case, as same as the aforementioned structure, the oAR 21 may be structured in such a manner as to receive the FBU message + the adjacent mQNE information from the MN 10 and then request starting of establishment of the QoS path to the nAR 31 of the subnet to which the MN 10 moves next.

In this manner, when the oAR 21 is the mQNE 41, regardless of the presence or absence of the adjacent mQNE information from the MN 10, it is possible to employ a structure in such a manner as to realize the invention in all cases. It is possible that, for example, the oAR 21 executes processes according to the invention only when the oAR 21 receives information (for example, a predetermined flag in the FBU message) indicating that the process of promptly establishing the QoS path after handover of the invention is executed simultaneously with the FBU message.

### <When oAR 21 has a function of acquiring adjacent mQNE information>

For example, when the oAR 21 has the structure illustrated in FIG. 6, the oAR 21 can acquire information of the mQNE 41 adjacent to the MN 10 on the QoS path relating to the MN 10 (adjacent mQNE information) as mentioned above. In this case, the invention can be realized in other modes than the mode (encircled number 5 in FIG. 10) where the oAR 21 shown in FIG. 7 forwards the adjacent mQNE information received from the MN 10 to the nAR 31.

For example, in a case where the oAR 21 is configured in such a manner that the oAR 21 receives the FBU message regulated by the conventional FMIP from MN 10, acquires adjacent mQNE information by itself and sends an HI message + adjacent mQNE information to the nAR 31, the invention can be realized (encircled number 6 in FIG. 10). In this case, the oAR 21 should acquire adjacent mQNE information using the CARD or the like, and send the adjacent mQNE information acquired this way to the nAR 31 before step S117 in the oAR 21 in FIG. 7.

Though not illustrated, when the oAR 21 can acquire adjacent mQNE information, and has a function capable of directly or indirectly requesting the mQNE 41 specified by the adjacent mQNE information to establish a QoS path for the MN 10 with the nAR 31, the invention can be realized regardless of the presence or absence of adjacent mQNE information in an FBU message or an HI message.

### <When oAR 21 has no function of acquiring adjacent mQNE information>

When the oAR 21 is not an mQNE and cannot acquire adjacent mQNE information, the invention can be realized only in the mode (encircled number 7 in FIG. 10) where the oAR 21 shown in FIG. 7 forwards the adjacent mQNE information received from the MN 10 to the nAR 31.

### INDUSTRIAL APPLICABILITY

The communication handover method, the communication message processing method, and the program and the communication system for causing a computer to execute those methods, according to the invention, can allow a mobile node which performs handover to promptly and continuously get an additional service before and after the handover, are applied to the technical field relating to the handover of a mobile node which performs radio communication, and more particularly, are applicable to a technical field relating to the handover of a mobile node which performs radio communication using the mobile IPv6 (Mobile Internet Protocol version 6) protocol that is the next generation Internet protocol and FMIP (Fast Mobile Internet Protocol).

## Claims

1. A communication handover method for use in a mobile node in a communication system in which a plurality of access routers each constituting a subnet are connected together over a communication network and at least one or more of access points forming a unique communication available area are connected to each of the plurality of access routers, the mobile node being so configured as to connect to the access router connected with the access points, through radio communication with the access points within the communication available area, the communication handover method comprising:
a handover determination step of determining that communication is switched over from an access point currently in communication to another access point;
an address configuration step of configuring an address adaptable in the subnet constituted by the access router which has control over the another access point determined in the handover determination step;
an information acquisition step of acquiring information on a node which can change a path relating to a mobility supported additional service established by a current subnet connection; and
an information transmission step of transmitting information on the node together with a message including the address configured in the address configuration step to the access router constituting the subnet which is currently connected.

2. The communication handover method according to claim 1, wherein in the information transmission step, the information on the node is inserted in the message including the address, and the message including the address and the information on the node are sent, or the message including the address and the information on the node are sent as different messages.

3. The communication handover method according to claim 1, wherein an FBU message relating to an FMIP is used as the message including the address in the information transmission step.

4. The communication handover method according to claim 1, wherein in the information acquisition step, information on a node which has NSIS implemented therein and is adjacent to the mobile node on the path is used as the information on the node.

5. The communication handover method according to claim 1, wherein an IP address of the node is used as the information on the node.

6. A communication handover program for causing a computer to execute the communication handover method as recited in claim 1.

7. A communication message processing method for use in at least one of a plurality of access routers in a communication system in which the plurality of access routers each constituting a subnet are connected together over a communication network, at least one or more of access points forming a unique communication available area are connected to each of the plurality of access routers, and a mobile node present in the communication available area is configured in such a manner as to connect to the subnet constituted by the access router connected with the access points, through radio communication with the access points, the communication message processing method comprising:
an information reception step of receiving information on a node which can change a path relating to a mobility supported additional service established for a current mobile node, together with a message including an address adaptable in another subnet, from the mobile node which performs a handover to the another subnet from the subnet constituted by the access router; and
an information transmission step of transmitting information on the node received in the information reception step, together with the message including the address received in the information reception step, to the access router constituting another subnet to which the mobile node performs a handover.

8. The communication message processing method according to claim 7, wherein in the information reception step, the information on the node is inserted in the message including the address, and a message including the information on the node are received, or the message including the address and the information on the node are received separately, and
in the information transmission step, the information on the node is inserted in the message including the address, and the message including the address and the information on the node are sent, or the message including the address and the information on the node are sent as different messages.

9. The communication message processing method according to claim 7, wherein an FBU message relating to an FMIP is used as the message including the address in the information reception step, and an Hi message relating to the FMIP is used as the message including the address in the information transmission step.

10. A communication message processing method for use in at least one of a plurality of access routers in a communication system in which the plurality of access routers each constituting a subnet are connected together over a communication network, at least one or more of access points forming a unique communication available area are connected to each of the plurality of access routers, and a mobile node present in the communication available area is configured in such a manner as to connect to the subnet constituted by the access router connected with the access points, through radio communication with the access points, the communication message processing method comprising:
an information reception step of receiving a message including an address adaptable in another subnet from the mobile node which performs a handover to the another subnet from the subnet constituted by the access router;
an information acquisition step of acquiring information on a node which can change a path relating to a mobility supported additional service established by a current subnet connection; and
an information transmission step of transmitting information on the node received in the information reception step, together with the message including the address received in the information reception step, to the access router constituting another subnet to which the mobile node performs a handover.

11. The communication message processing method according to claim 10, wherein in the information transmission step, the information on the node is inserted in the message including the address, and the message including the address and the information on the node are sent, or the message including the address and the information on the node are sent as different messages.

12. The communication message processing method according to claim 10, wherein an FBU message relating to an FMIP is used as the message including the address in the information transmission step.

13. A communication message processing method for use in at least one of a plurality of access routers in a communication system in which the plurality of access routers each constituting a subnet are connected together over a communication network, at least one or more of access points forming a unique communication available area are connected to each of the plurality of access routers, and a mobile node present in the communication available area is configured in such a manner as to connect to the subnet constituted by the access router connected with the access points, through radio communication with the access points, the communication message processing method comprising:
an information reception step of receiving a message including an address adaptable in another subnet from the mobile node which performs a handover to the another subnet from the subnet constituted by the access router; and
a path establishment step in which the access router has a function of establishing a path relating to a mobility supported additional service established by a current subnet connection, a message to request establishment of the path is sent to the access router constituting another subnet to which the mobile node performs a handover, and a new path relating to a mobility supported additional service with the access router constituting another subnet to which the mobile node performs a handover.

14. The communication message processing method according to claim 13, comprising:
a tunnel establishment step of establishing a tunnel for packet forwarding from the access router to the access router constituting the another subnet, and wherein
the new path between the access router and the access router constituting another subnet is established by using the tunnel established in the tunnel establishment step.

15. A communication message processing method for use in at least one of a plurality of access routers in a communication system in which the plurality of access routers each constituting a subnet are connected together over a communication network, at least one or more of access points forming a unique communication available area are connected to each of the plurality of access routers, and a mobile node present in the communication available area is configured in such a manner as to connect to the subnet constituted by the access router connected with the access points, through radio communication with the access points, the communication message processing method comprising:
an information reception step of receiving information on a node which can change a path relating to a mobility supported additional service established for a current mobile node, together with a message including an address adaptable in the subnet, from the access router constituting another subnet to which the mobile node that performs a handover to the subnet constituted by the access router is connected before handover;
a path establishment step in which the access router has a function of establishing a path relating to a mobility supported additional service established by a current subnet connection, a message to request establishment of a new path relating to a mobility supported additional service with the access router to the node based on the information on the node.

16. A communication message processing method for use in at least one of a plurality of access routers in a communication system in which the plurality of access routers each constituting a subnet are connected together over a communication network, at least one or more of access points forming a unique communication available area are connected to each of the plurality of access routers, and a mobile node present in the communication available area is configured in such a manner as to connect to the subnet constituted by the access router connected with the access points, through radio communication with the access points, the communication message processing method comprising:
a request reception step in which the access router has a function of establishing a path relating to a mobility supported additional service, and a message to request establishment of a new path relating to the mobility supported additional service with the access router is received from the access router constituting another subnet to which the mobile node that performs a handover to the subnet constituted by the access router is connected before handover; and
a path establishment step in which the new path is established upon reception of the message to request establishment of the new path in the request reception step.

17. The communication message processing method according to claim 15 or 16, comprising a step of establishing a path relating to the mobility supported additional service when the mobile node performs a handover so as to connect to the subnet constituted by the access router.

18. The communication message processing method according to claim 15 or 16, comprising a step of searching for a path different from the new path and establishing the path different from the new path, after the mobile node connects to the subnet constituted by the access router.

19. A communication handover program for causing a computer to execute the communication message processing method as recited in any one of claims 7, 10, 13, 15 and 16.

20. A communication system in which the plurality of access routers each constituting a subnet are connected together over a communication network, at least one or more of access points forming a unique communication available area are connected to each of the plurality of access routers, and a mobile node present in the communication available area is configured in such a manner as to connect to the subnet constituted by the access router connected with the access points, through radio communication with the access points, wherein
the mobile node or the access router constituting a subnet to which the mobile node is connected before handover has a function of acquiring information on a node which changes a path relating to a mobility supported additional service, and
the information on the node is sent together with a message relating to FMIP to an access router constituting a subnet to which the mobile node is connected after handover, from the mobile node or the access router constituting a subnet to which the mobile node is connected before handover, and a new path replacing the path established for the mobile node before handover is established between the access router constituting the subnet to which the mobile node is connected after handover and the node.

21. A communication system in which the plurality of access routers each constituting a subnet are connected together over a communication network, at least one or more of access points forming a unique communication available area are connected to each of the plurality of access routers, and a mobile node present in the communication available area is configured in such a manner as to connect to the subnet constituted by the access router connected with the access points, through radio communication with the access points, wherein
the access router constituting a subnet to which the mobile node is connected before handover has a function of establishing a path relating to a mobility supported additional service, and when a message relating to FMIP is sent to the access router constituting the subnet to which the mobile node is connected before handover, a new path replacing the path established for the mobile node before handover is established between the access router constituting the subnet to which the mobile node is connected before handover and the access router constituting the subnet to which the mobile node is connected after handover.

## Amended claims

### Amended claims under Art. 19.1 PCT

**15.** an information reception step of receiving information on a node which can change a path relating to a mobility supported additional service established for a current mobile node, together with a message including an address adaptable in the subnet, from the access router constituting another subnet to which the mobile node that performs a handover to the subnet constituted by the access router is connected before handover;
a path establishment step in which the access router has a function of establishing a path relating to a mobility supported additional service established by a current subnet connection, a message to request establishment of a new path relating to a mobility supported additional service with the access router to the node based on the information on the node.

**16.** (Amended) The communication message processing method according to claim 15, comprising a step of establishing a path relating to the mobility supported additional service when the mobile node performs a handover so as to connect to the subnet constituted by the access router.

**17.** (Amended) The communication message processing method according to claim 15 , comprising a step of searching for a path different from the new path and establishing the path different from the new path, after the mobile node connects to the subnet constituted by the access router.

**18.** (Amended) A communication message processing method for use in at least one of a plurality of access routers in a communication system in which the plurality of access routers each constituting a subnet are connected together over a communication network, at least one or more of access points forming a unique communication available area are connected to each of the plurality of access routers, and a mobile node present in the communication available area is configured in such a manner as to connect to the subnet constituted by the access router connected with the access points, through radio communication with the access points, the communication message processing method comprising:
a request reception step in which the access router has a function of establishing a path relating to a mobility supported additional service, and a message to request establishment of a new path relating to the mobility supported additional service with the access router is received from the access router constituting another subnet to which the mobile node that performs a handover to the subnet constituted by the access router is connected before handover; and
a path establishment step in which the new path is established upon reception of the message to request establishment of the new path in the request reception step.

**19.** (Amended) The communication message processing method according to claim 18, comprising a step of establishing a path relating to the mobility supported additional service when the mobile node performs a handover so as to connect to the subnet constituted by the access router.

**20.** (Amended) The communication message processing method according to claim 18, comprising a step of searching for a path different from the new path and establishing the path different from the new path, after the mobile node connects to the subnet constituted by the access router.

**21.** (Amended) A communication handover program for causing a computer to execute the communication message processing method as recited in claim 7.

**22.** (Amended) A communication handover program for causing a computer to execute the communication message processing method as recited in claim 10.

**23.** (Amended) A communication handover program for causing a computer to execute the communication message processing method as recited in claim 13.

**24.** (Amended) A communication handover program for causing a computer to execute the communication message processing method as recited in claim 15.

**25.** (Amended) A communication handover program for causing a computer to execute the communication message processing method as recited in claim 18.

**26.** (Amended) A communication system in which the plurality of access routers each constituting a subnet are connected together over a communication network, at least one or more of access points forming a unique communication available area are connected to each of the plurality of access routers, and a mobile node present in the communication available area is configured in such a manner as to connect to the subnet constituted by the access router connected with the access points, through radio communication with the access points, wherein
the mobile node or the access router constituting a subnet to which the mobile node is connected before handover has a function of acquiring information on a node which changes a path relating to a mobility supported additional service, and
the information on the node is sent together with a message relating to FMIP to an access router constituting a subnet to which the mobile node is connected after handover, from the mobile node or the access router constituting a subnet to which the mobile node is connected before handover, and a new path replacing the path established for the mobile node before handover is established between the access router constituting the subnet to which the mobile node is connected after handover and the node.

**27.** (Amended) A communication system in which the plurality of access routers each constituting a subnet are connected together over a communication network, at least one or more of access points forming a unique communication available area are connected to each of the plurality of access routers, and a mobile node present in the communication available area is configured in such a manner as to connect to the subnet constituted by the access router connected with the access points, through radio communication with the access points, wherein
the access router constituting a subnet to which the mobile node is connected before handover has a function of establishing a path relating to a mobility supported additional service, and when a message relating to FMIP is sent to the access router constituting the subnet to which the mobile node is connected before handover, a new path replacing the path established for the mobile node before handover is established between the access router constituting the subnet to which the mobile node is connected before handover and the access router constituting the subnet to which the mobile node is connected after handover.
